# FASCICULE DE BREVET EUROPEEN

(11) **EP 1 349 688 B1**
(45) Date de publication et mention de la délivrance du brevet: **21.05.2008**
(21) Numéro de dépôt: 02710942.0
(22) Date de dépôt: 04.01.2002
(51) Int. Cl.: B23B 5/18

(54) **PROCEDE DE FABRICATION D'UN VILEBREQUIN**
VERFAHREN ZUR HERSTELLUNG EINER KURBENWELLE
METHOD FOR PRODUCTION OF A CRANKSHAFT

(30) Priorité: 12.01.2001 FR 0100361
(43) Date de publication de la demande: 08.10.2003
(73) Titulaire: RENAULT S.A.S., 92100 Boulogne Billancourt (FR)
(72) Inventeur: PIERRE, Jackie, F-92100 Boulogne (FR); TOURNEROCHE, Claude, F-95870 Bezons (FR)
(86) Numéro de dépôt international: PCT/FR2002/000020
(87) Numéro de publication internationale: WO 2002/055241

(56) Documents cités:
- FR-A- 2 761 129
- US-A- 5 408 906
- US-A- 6 071 049

## Description

La présente invention concerne un procédé de fabrication d'un vilebrequin de moteur à combustion interne (voir par exemple FR-A-2 761 129).

L'invention concerne plus particulièrement un procédé de fabrication d'un vilebrequin de moteur à combustion interne, notamment de véhicule automobile, qui comporte un tronçon cylindrique d'extrémité axiale avant et un tronçon cylindrique d'extrémité axiale arrière qui sont coaxiaux, du type comportant une phase initiale au cours de laquelle on usine les extrémités axiales du vilebrequin brut, au moins une phase intermédiaire au cours de laquelle le vilebrequin en cours de fabrication, ou vilebrequin intermédiaire, est monté sur un outillage qui saisit au moins une extrémité axiale du vilebrequin intermédiaire à l'aide d'au moins un organe de préhension et/ou d'entraînement en vue d'effectuer des opérations de fabrication sur le vilebrequin intermédiaire, et une phase finale au cours de laquelle on effectue sur le vilebrequin intermédiaire des opérations de finition de manière à obtenir le vilebrequin fini.

Il est devenu nécessaire de renouveler de manière de plus en plus rapprochée les organes mécaniques d'un moteur, comme des autres pièces d'un véhicule, de manière à pouvoir proposer en permanence des produits de conception moderne.

Ce renouvellement régulier implique une grande rapidité de développement et de mise en production des nouvelles pièces.

Les lignes de production du type flexibles permettent de répondre à ces contraintes.

L'utilisation de lignes de fabrication du type flexibles pour la réalisation de vilebrequins permet de fabriquer différents types de vilebrequins sur la même chaîne de fabrication.

Ces lignes flexibles permettent une grande rapidité de renouvellement des gammes de pièces puisqu'il n'est pas nécessaire de modifier tous les éléments de la chaîne pour mettre en production un nouveau type de vilebrequin différent du précédent.

Cependant, le vilebrequin est l'une des pièces les plus sollicitées du moteur. Ces sollicitations impliquent des contraintes de fabrication importantes, en particulier des tolérances dimensionnelles et géométriques de l'ordre de quelques micromètres.

Ces tolérances sévères nécessitent l'utilisation d'outils d'usinage de haute technologie et des précautions particulières lors de la fabrication.

De plus, chaque type de vilebrequin est dimensionné au plus juste afin d'optimiser les performances et l'encombrement du moteur associé. Il n'y a donc pas de dimensions communes d'un type de vilebrequin à un autre.

Par conséquent, les machines de la chaîne de fabrication doivent s'adapter aux dimensions de chacun des types de vilebrequins.

Pour que les lignes de fabrication flexibles puissent atteindre les objectifs fixés de performance industrielle, notamment en matière de qualité, de coûts et de délais, le temps de changement de rafale, c'est à dire le temps nécessaire pour que la ligne de fabrication soit en mesure de passer d'un type de vilebrequin à un autre, doit être le plus court possible -et les interventions nécessaires à ce passage doivent être les plus simples possible.

L'automatisation accrue des machines permet d'améliorer la flexibilité des lignes de fabrication.

Cependant, les machines actuelles ne comportent pas de dispositif flexible qui permette de brider ou d'entraîner en rotation différents types de vilebrequins.

Des adaptations manuelles des prises de pièce, par exemple des changements d'éléments ou des réglages, sont toujours nécessaires.

Ces adaptations provoquent des arrêts de production et elles diminuent donc le rendement de la ligne de production.

Ces adaptions nécessitent des interventions de la part d'opérateurs ce qui augmente le temps et les coûts de fabrication.

Ces adaptations ont aussi des conséquences néfastes sur la qualité de la fabrication car elles augmentent les risques de mauvais positionnement des mandrins, des mors ou des coquilles après le changement de ces éléments sur l'outil de fabrication.

On a proposé d'utiliser un outil comportant des mors étagés pour la prise de pièce. Les mors étagés permettent à l'outil de saisir des pièces de deux diamètres différents.

Cependant ce principe limite la diversité des pièces à seulement deux diamètres différents, ce qui revient à limiter la diversité des vilebrequins fabriqués sur la chaîne de fabrication à deux types.

On a proposé aussi d'uniformiser les valeurs de diamètre des extrémités des vilebrequins.

Ce principe n'est valable que pour une famille de moteurs modulaires puisque cela limite la diversité possible des formes de vilebrequins réalisés sur la chaîne de fabrication.

L'invention vise donc à remédier à ces inconvénients en évitant les adaptations de prise de pièce sur les vilebrequins.

Dans ce but, l'invention propose un procédé du type décrit précédemment, caractérisé en ce que, au cours de la phase initiale, on réalise, à au moins une extrémité axiale du vilebrequin brut, un embout provisoire, en forme de cylindre plein ou de couronne annulaire sensiblement cylindrique, de diamètre et de longueur axiale déterminés, de manière que la forme de chaque embout provisoire soit complémentaire de l'organe de préhension et/ou d'entraînement associé de l'outillage de chaque phase intermédiaire, et en ce qu'au cours de la phase finale on élimine la matière constituant chaque embout provisoire, de manière à former les tronçons cylindriques d'extrémité axiale du vilebrequin fini.

Selon d'autres caractéristiques de l'invention :
- on réalise un embout provisoire à chacune des extrémités axiales du vilebrequin brut ;
- au cours de la phase initiale, on réalise à l'extrémité axiale avant du vilebrequin brut un embout provisoire en forme de cylindre plein, qui s'étend axialement vers l'avant, de longueur axiale et de diamètre extérieur supérieurs respectivement à la longueur axiale et au diamètre extérieur du tronçon cylindrique d'extrémité axiale avant du vilebrequin fini, et on réalise à l'extrémité axiale arrière du vilebrequin brut un embout provisoire arrière en forme de couronne annulaire sensiblement cylindrique, de diamètre extérieur supérieur au diamètre extérieur du tronçon cylindrique d'extrémité axiale arrière, qui délimite, avec le tronçon cylindrique d'extrémité axiale arrière, une surface transversale d'épaulement orientée vers l'arrière ;
- la couronne arrière délimite, avec le tronçon cylindrique d'extrémité axiale arrière, une surface transversale d'épaulement orientée vers l'avant ;
- au cours de la phase initiale, on réalise dans la face transversale d'extrémité avant du cylindre avant au moins un trou central coaxial au vilebrequin et au moins un trou excentré d'indexation angulaire d'axe parallèle à l'axe du vilebrequin qui sont prévus pour coopérer respectivement avec la pointe et avec le toc d'un outillage d'usinage utilisé pendant la phase intermédiaire ;
- on réalise deux trous d'indexation angulaire qui sont diamétralement opposés par rapport à l'axe du vilebrequin ;
- au cours de la phase finale, la matière constituant chaque embout provisoire est éliminée par usinage.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente un vilebrequin fini d'un moteur à combustion interne ;
- la figure 2 est une vue de côté qui représente le vilebrequin de la figure précédente et qui représente des moyens de préhension et d'entraînement en rotation du vilebrequin par un tour;
- la figure 3 est une vue similaire à la précédente qui représente en traits fantôme les embouts provisoire du vilebrequin ;
- la figure 4 est une vue agrandie similaire à la précédente qui représente l'embout provisoire de l'extrémité axiale avant du vilebrequin ;
- la figure 5 est une vue similaire à la précédente qui représente l'embout provisoire de l'extrémité axiale arrière du vilebrequin ;
- la figure 6 est une vue similaire à celle de la figure 1 qui représente le vilebrequin muni de ses embouts provisoires ;
- la figure 7 est une vue similaire à celle de la figure 2 qui représente le vilebrequin de la figure 6 et qui représente des moyens de préhension et d'entraînement en rotation du vilebrequin par un tour ;
- la figure 8 est une vue de face selon la flèche F qui représente l'extrémité axiale avant du vilebrequin de la figure 7.

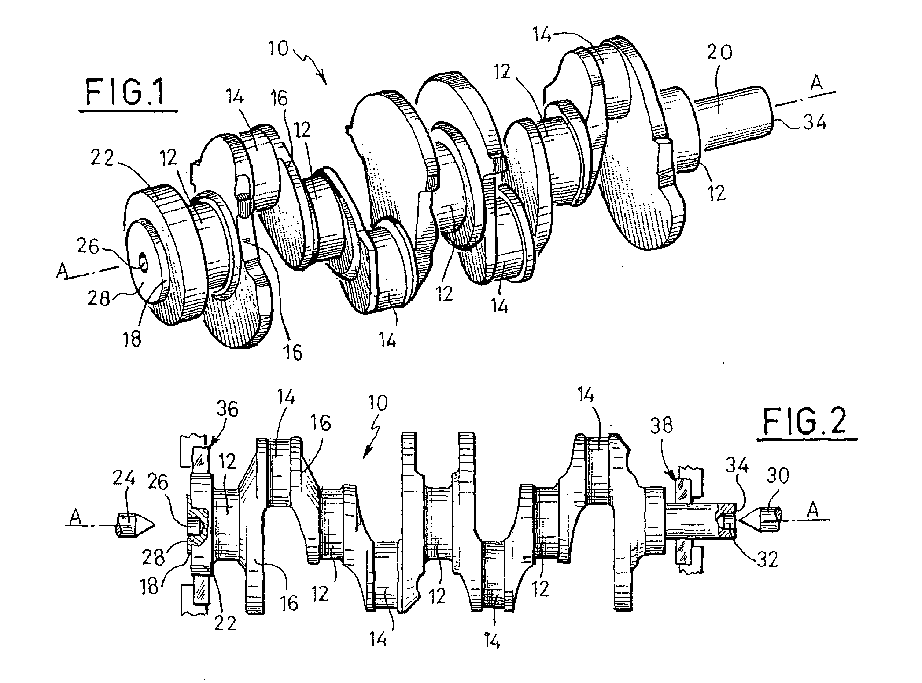

On a représenté sur la figure 1 un vilebrequin 10 d'un moteur à combustion interne de véhicule automobile comportant quatre cylindres.

Dans la suite de la description on utilisera arbitrairement un orientation d'avant en arrière suivant l'axe A-A du vilebrequin 10 qui correspond à une orientation de gauche à droite en considérant les figures 1 et 2.

Le vilebrequin 10 comporte classiquement des tourillons 12 d'axe A-A qui sont prévus pour reposer sur des paliers du moteur, et des manetons 14 sur lesquels les bielles des pistons du moteur sont prévues pour être articulées.

Les tourillons 12 et les manetons 14 sont reliés les uns aux autres par des coudes 16, ou bras de manivelle.

Le vilebrequin 10 comporte un tronçon cylindrique d'extrémité axiale avant 18 et un tronçon cylindrique d'extrémité axiale arrière 20 qui sont coaxiaux à l'axe A-A du vilebrequin 10.

Le tronçon avant 18 est prévu ici pour être monté dans le moteur du côté du volant moteur, alors que le tronçon arrière 20 est prévu ici pour être monté dans le moteur du côté de la distribution, c'est à dire que le tronçon arrière 20 est prévu pour porter le pignon d'entraînement des arbres à cames du moteur.

Le tronçon avant 18 forme ici un pion de centrage du vilebrequin 10 dans un trou complémentaire du volant moteur.

Le vilebrequin 10 comporte aussi à son extrémité axiale avant, en retrait axialement vers l'arrière par rapport au tronçon avant 18, une embase 22 qui a la forme d'une couronne annulaire cylindrique.

L'embase 22 est prévue pour être en appui axial, par sa face transversale avant, contre la face transversale arrière du volant moteur, de manière à permettre la fixation du volant moteur au vilebrequin 10, par exemple par vissage.

Le procédé de fabrication de ce vilebrequin 10 selon l'état de la technique comporte généralement les phases suivantes :
- une phase initiale au cours de laquelle on usine les extrémités axiales du vilebrequin 10 brut, de manière à former les tronçons avant 18 et arrière 20 ;
- au moins une phase intermédiaire au cours de laquelle le vilebrequin 10 en cours de fabrication, ou vilebrequin intermédiaire, est monté sur un tour qui saisit les deux extrémités axiales du vilebrequin 10, en vue d'effectuer des opérations d'usinage sur le vilebrequin 10 intermédiaire ;
- une phase finale au cours de laquelle on effectue sur le vilebrequin 10 intermédiaire des opérations de finition de manière à obtenir le vilebrequin 10 fini.

Au cours de la mise en oeuvre du procédé de fabrication du vilebrequin 10 sur la chaîne de fabrication, on utilise des outils qui nécessitent de maintenir le vilebrequin 10 et de l'entraîner en rotation. On utilise par exemple un tour pour usiner certains éléments du vilebrequin 10.

Comme on l'a représenté sur la figure 2, le tour comporte généralement à l'avant une pointe 24 qui est insérée dans un trou avant 26 réalisé dans la face transversale avant 28 du tronçon avant 18 et à l'arrière une contre pointe 30 qui est insérée dans un trou arrière 32 réalisé dans la face transversale arrière 34 du tronçon arrière 20.

Le tour comporte aussi des moyens de bridage du vilebrequin 10, ici des mors avant 36 qui serrent radialement l'embase 22 et des mors arrière 38 qui serrent radialement le tronçon arrière 20.

Ces mors 36, 38 permettent notamment au tour d'entraîner le vilebrequin 10 en rotation.

On constate que ces mors 36, 38 doivent être adaptés respectivement au diamètre de l'embase 22 et au diamètre du tronçon arrière 20 qui sont différents d'un type de vilebrequin 10 à l'autre.

C'est pourquoi l'invention propose de réaliser le vilebrequin 10 selon le procédé suivant.

Le procédé selon l'invention propose de réaliser, au cours de la phase initiale, un embout provisoire 40, 42 à chacune des extrémités axiales du vilebrequin 10, chacun de ces embouts provisoires 40, 42 disparaissant au cours de la phase finale.

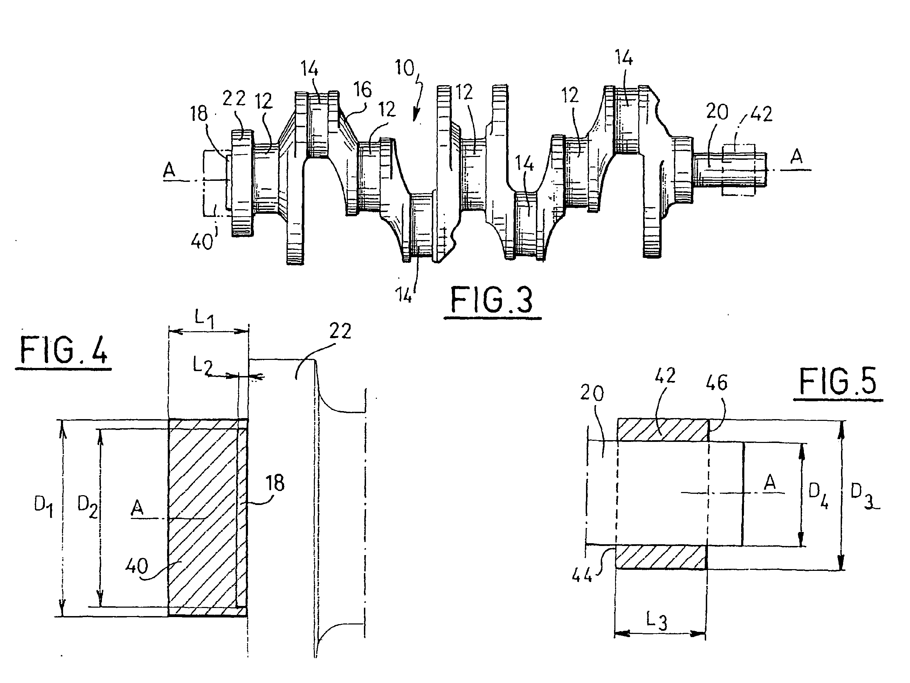

Sur la figure 3, les embouts provisoires 40, 42 sont représentés en trait fantôme sur le vilebrequin 10. On constate donc que les embouts provisoires 40, 42 constituent des ajouts de matière par rapport à un vilebrequin 10 classique.

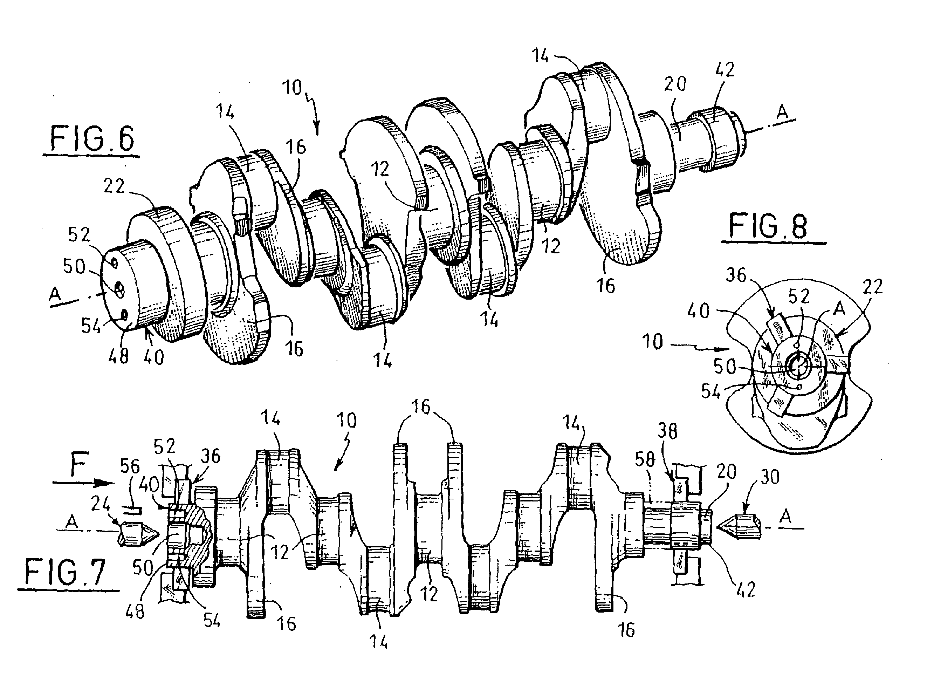

Le vilebrequin 10 muni de ses embouts provisoires 40, 42 est représenté en perspective sur la figure 6.

L'embout provisoire avant 40, représenté sur la figure 4, a la forme d'un cylindre plein qui s'étend axialement vers l'avant depuis la face transversale avant de l'embase 22.

La longueur axiale L1 du cylindre avant 40 est supérieure à la longueur axiale L2 du tronçon cylindrique avant 18, et le diamètre extérieur D1 du cylindre avant 40 est supérieur au diamètre extérieur D2 du tronçon cylindrique avant 18.

L'embout provisoire arrière 42, représenté sur la figure 5, a la forme d'une couronne annulaire cylindrique qui est réalisée autour du tronçon cylindrique arrière 20.

Le diamètre extérieur D3 de la couronne arrière 42 est supérieur au diamètre extérieur D4 du tronçon cylindrique arrière 20 et la longueur axiale L3 de la couronne arrière 42 est inférieure à la longueur axiale L4 du tronçon cylindrique arrière 20, de sorte que la couronne arrière 42- délimite avec le tronçon cylindrique arrière 20 une surface transversale d'épaulement 44 orientée vers l'avant et une surface transversale d'épaulement 46 orientée vers l'arrière.

Le cylindre avant 40 et la couronne arrière 42 sont prévus pour être sensiblement identiques d'un vilebrequin 10 à l'autre, quel que soit leur type.

En particulier, quel que soit le type de vilebrequin 10, les diamètres extérieurs D1 des cylindres avant 40 sont identiques et les diamètres extérieurs D3 des couronnes arrière 42 sont identiques.

Le cylindre avant 40 et la couronne arrière 42 du vilebrequin 10 sont utilisés pendant les phases intermédiaires du procédé de fabrication du vilebrequin 10 pour saisir les extrémités axiales du vilebrequin 10, comme on l'a représenté sur les figures 7 et 8.

En effet, les diamètres D1, D3 du cylindre avant 40 et de la couronne arrière 42 étant toujours identiques, ils permettent d'utiliser les mêmes moyens de bridage 36, 38 quel que soit le type de vilebrequin 10 fabriqué. Il n'est donc plus nécessaire d'adapter le diamètre de serrage des mors 36, 38 de l'outil.

Sur la figure 7 on a représenté les mors avant 36 qui serrent radialement le cylindre avant 40 et les mors arrière 38 qui serrent radialement la couronne arrière 42.

La face transversale avant 48 du cylindre avant 40 comporte un trou central étagé 50 d'axe A-A, le diamètre de son tronçon avant étant supérieur au diamètre de son tronçon arrière et le diamètre de son tronçon arrière étant sensiblement égal au diamètre du trou 26 du tronçon avant 18 du vilebrequin de la figure 1, de manière à permettre l'insertion de la pointe 24 du tour dans l'extrémité axiale avant du vilebrequin 10.

On note que, suivant les machines utilisées pendant la fabrication du vilebrequin 10, le bridage peut s'effectuer aux deux extrémités axiales ou à une seule extrémité axiale du vilebrequin 10, et la pointe et la contre-pointe peuvent ne pas être utilisées.

Avantageusement, on réalise dans la face transversale avant 48 du cylindre avant 40 deux trous excentrés 52, 54, diamétralement opposés par rapport à l'axe A-A du vilebrequin 10 et d'axes parallèles à l'axe A-A du vilebrequin 10.

Les trous excentrés 52, 54 sont prévus pour recevoir le toc 56 d'un outil d'usinage utilisé pendant la phase intermédiaire, de manière à permettre l'indexation angulaire et l'entraînement en rotation du vilebrequin 10.

On note que les trous excentrés 52, 54 sont identiques quel que soit le type de vilebrequin 10 réalisé.

La profondeur des trous excentrés 52, 54 est inférieure à la différence entre la longueur axiale L1 du cylindre avant 40 et la longueur axiale L2 du tronçon avant 18, de manière qu'ils disparaissent en même temps que les embouts provisoires 40, 42 lors de la phase finale du procédé.

De préférence, le système d'indexation et d'entraînement en rotation par le toc 56 remplace le dispositif de bridage par les mors 36, 38.

Ce système d'entraînement permet ainsi de dégager totalement les zones situées autour des extrémités axiales du vilebrequin 10, qui ne comportent plus de dispositif de bridage, pour faciliter les opérations d'usinage.

Selon une variante de réalisation qui est représentée en traits fantôme sur la figure 7, la couronne arrière 42 se prolonge axialement vers l'avant, dans la zone 58, jusqu'à l'extrémité axiale avant du tronçon arrière 20.

Cet ajout de matière permet de rigidifier le vilebrequin 10 pour éviter qu'il se déforme pendant les phases intermédiaires du procédé de fabrication, notamment lors de la réalisation d'ébauches.

Lors de la phase finale du procédé selon l'invention, la matière constituant le cylindre avant 40 et la couronne arrière 42 est éliminée par usinage, de manière à former les tronçons cylindriques avant 18 et arrière 20 du vilebrequin 10 fini.

## Revendications

1. Procédé de fabrication d'un vilebrequin (10) de moteur à combustion interne, notamment de véhicule automobile, qui comporte un tronçon cylindrique d'extrémité axiale avant (18) et un tronçon cylindrique d'extrémité axiale arrière (20) qui sont coaxiaux, du type comportant une phase initiale au cours de laquelle on usine les extrémités axiales du vilebrequin (10) brut, au moins une phase intermédiaire au cours de laquelle le vilebrequin (10) en cours de fabrication, ou vilebrequin (10) intermédiaire, est monté sur un outillage qui saisit au moins une extrémité axiale du vilebrequin (10) intermédiaire à l'aide d'au moins un organe (36, 38) de préhension et/ou d'entraînement en vue d'effectuer des opérations de fabrication sur le vilebrequin (10) intermédiaire, et une phase finale au cours de laquelle on effectue sur le vilebrequin (10) intermédiaire des opérations de finition de manière à obtenir le vilebrequin (10) fini,
**caractérisé en ce que**, au cours de la phase initiale, on réalise, à au moins une extrémité axiale du vilebrequin (10) brut, un embout provisoire (40, 42), en forme de cylindre plein ou de couronne annulaire sensiblement cylindrique, de diamètre (D1, D3) et de longueur axiale (L1, L3) déterminés, de manière que la forme de chaque embout provisoire (40, 42) soit complémentaire de l'organe (36, 38) de préhension et/ou d'entraînement associé de l'outillage de chaque phase intermédiaire, et **en ce qu'**au cours de la phase finale on élimine la matière constituant chaque embout provisoire (40, 42), de manière à former les tronçons cylindriques d'extrémité axiale (18, 20) du vilebrequin (10) fini.

2. Procédé selon la revendication précédente, **caractérisé en ce qu'**on réalise un embout provisoire (40, 42) à chacune des extrémités axiales du vilebrequin (10) brut.

3. Procédé selon la revendication précédente, **caractérisé en ce que**, au cours de la phase initiale, on réalise à l'extrémité axiale avant du vilebrequin (10) brut un embout provisoire (40) en forme de cylindre plein, qui s'étend axialement vers l'avant, de longueur axiale (L1) et de diamètre extérieur (D1) supérieurs respectivement à la longueur axiale (L2) et au diamètre extérieur (D2) du tronçon cylindrique d'extrémité axiale avant (18) du vilebrequin (10) fini, et on réalise à l'extrémité axiale arrière du vilebrequin (10) brut un embout provisoire arrière (42) en forme de couronne annulaire sensiblement cylindrique, de diamètre extérieur (D3) supérieur au diamètre extérieur (D4) du tronçon cylindrique d'extrémité axiale arrière (20), qui délimite, avec le tronçon cylindrique d'extrémité axiale arrière (20), une surface transversale d'épaulement (46) orientée vers l'arrière.

4. Procédé selon la revendication précédente, **caractérisé en ce que** la couronne arrière (42) délimite, avec le tronçon cylindrique d'extrémité axiale arrière (20), une surface transversale d'épaulement (44) orientée vers l'avant.

5. Procédé selon l'une quelconque des revendications 3 ou 4, **caractérisé en ce que**, au cours de la phase initiale, on réalise dans la face transversale d'extrémité avant (48) du cylindre avant (40) au moins un trou central (50) coaxial au vilebrequin (10) et au moins un trou excentré (52, 54) d'indexation angulaire d'axe parallèle à l'axe (A-A) du vilebrequin (10) qui sont prévus pour coopérer respectivement avec la pointe (24) et avec le toc (56) d'un outillage d'usinage utilisé pendant la phase intermédiaire.

6. Procédé selon la revendication précédente, **caractérisé en ce que** l'on réalise deux trous (52, 54) d'indexation angulaire qui sont diamétralement opposés par rapport à l'axe (A-A) du vilebrequin (10).

7. Procédé selon l'une quelconque des revendications précédentes, **caractérisé en ce que**, au cours de la phase finale, la matière constituant chaque embout provisoire (40, 42) est éliminée par usinage.

## Claims

1. Method of manufacturing a crankshaft (10) for an internal combustion engine, particularly of a motor vehicle, which comprises a front axial end cylindrical portion (18) and a rear axial end cylindrical portion (20) which are coaxial, of the type comprising an initial phase during which the axial ends of the unfinished crankshaft (10) are machined, at least one intermediate phase during which the crankshaft-in-progress (10) or intermediate crankshaft (10) is mounted on tooling which grasps at least one axial end of the intermediate crankshaft (10) using at least one gripping and/or driving member (36, 38) in order to carry out manufacturing operations on the intermediate crankshaft (10), and a final phase during which finishing operations are performed on the intermediate crankshaft (10) in order to obtain the finished crankshaft (10),
**characterized in that**, during the initial phase, a temporary end piece (40, 42) in the form of a solid cylinder or of a substantially cylindrical annular ring of determined diameter (D1, D3) and determined axial length (L1, L3) is formed at least at one axial end of the unfinished crankshaft (10) such that the shape of each temporary end piece (40, 42) complements the associated gripping and/or driving member (36, 38) of the tooling used in each intermediate phase, and **in that** during the final phase, the material that forms each temporary end piece (40, 42) is removed so as to form the axial end cylindrical portions (18, 20) of the finished crankshaft (10).

2. Method according to the preceding claim,
**characterized in that** a temporary end piece (40, 42) is produced at each of the axial ends of the unfinished crankshaft (10).

3. Method according to the preceding claim,
**characterized in that**, during the initial phase, a temporary end piece (40) in the form of a solid cylinder extending axially forward, with an axial length (L1) and an outside diameter (D1) which are greater respectively than the axial length (L2) and than the outside diameter (D2) of the front axial end cylindrical portion (18) of the finished crankshaft (10) is produced at the front axial end of the unfinished crankshaft (10) and a rear temporary end piece (42) in the form of a substantially cylindrical annular ring of an outside diameter (D3) greater than the outside diameter (D4) of the rear axial end cylindrical portion (20) and which, with the rear axial end cylindrical portion (20) delimits a transverse shoulder surface (46) directed towards the rear, is produced at the rear axial end of the unfinished crankshaft (10).

4. Method according to the preceding claim,
**characterized in that** the rear ring (42) delimits, with the rear axial end cylindrical portion (20), a transverse shoulder surface (44) directed forward.

5. Method according to either one of Claims 3 and 4,
**characterized in that** during the initial phase, at least one central hole (50) coaxial with the crankshaft (10) and at least one angular indexing off-centred hole (52, 54) of an axis parallel to the axis (A-A) of the crankshaft (10) and which are designed to collaborate respectively with the tip (24) and with the dog (56) of a machine tool used during the intermediate phase are produced in the front end transverse face (48) of the front cylinder (40).

6. Method according to the preceding claim,
**characterized in that** two angular indexing holes (52, 54) which are diametrically opposite one another with respect to the axis (A-A) of the crankshaft (10) are produced.

7. Method according to any one of the preceding claims, **characterized in that**, during the final phase, the material of which each temporary end piece (40, 42) is made is eliminated by machining it away.

## Patentansprüche

1. Verfahren zum Herstellen einer Kurbelwelle (10) einer Brennkraftmaschine insbesondere eines Kraftfahrzeugs, die am vorderen axialen Ende (18) ein zylindrisches Teilstück und am hinteren axialen Ende (20) ein zylindrisches Teilstück enthält, die koaxial sind, des Typs mit einer Anfangsphase, in deren Verlauf die axialen Enden der Rohkurbelwelle (10) bearbeitet werden, wenigstens einer Zwischenphase, in deren Verlauf die gerade hergestellte Kurbelwelle (10) oder Zwischenkurbelwelle (10) an einem Werkzeugsatz angebracht wird, der wenigstens ein axiales Ende der Zwischenkurbelwelle (10) mit Hilfe wenigstens eines Greif- und/oder Antriebsorgans (36, 38) ergreift, um Herstellungsoperationen an der Zwischenkurbelwelle (10) auszuführen, und einer Endphase, in deren Verlauf an der Zwischenkurbelwelle (10) Endbearbeitungsoperationen ausgeführt werden, um eine fertig gestellte Kurbelwelle (10) zu erhalten,
**dadurch gekennzeichnet, dass** im Verlauf der Anfangsphase an wenigstens einem axialen Ende der Rohkurbelwelle (10) ein vorläufiger Ansatz (40, 42) in Form eines Vollzylinders oder eines im Wesentlichen zylindrischen Ringkranzes mit einem bestimmten Durchmesser (D1, D3) und einer bestimmten axialen Länge (L1, L3) verwirklicht wird, derart, dass die Form jedes vorläufigen Ansatzes (40, 42) zu dem Greif- und/oder Antriebsorgan (36, 38), das dem Werkzeugsatz jeder Zwischenphase zugeordnet ist, komplementär ist, und dass im Verlauf der Endphase das jeden vorläufigen Ansatz (40, 42) bildende Material entfernt wird, derart, dass die zylindrischen Teilstücke (18, 20) an den axialen Enden der fertig gestellten Kurbelwelle (10) gebildet werden.

2. Verfahren nach dem vorhergehenden Anspruch, **dadurch gekennzeichnet, dass** an jedem der axialen Enden der Rohkurbelwelle (10) ein vorläufiger Ansatz (40, 42) verwirklicht wird.

3. Verfahren nach dem vorhergehenden Anspruch, **dadurch gekennzeichnet, dass** im Verlauf der Anfangsphase am vorderen axialen Ende der Rohkurbelwelle (10) ein vorläufiger Ansatz (40) in Form eines Vollzylinders verwirklicht wird, der sich axial nach vorn erstreckt und eine axiale Länge (L1) und einen Außendurchmesser (D1) besitzt, die größer als die axiale Länge (L2) bzw. der Außendurchmesser (D2) des zylindrischen Teilstücks (18) am axial vorderen Ende der fertig gestellten Kurbelwelle (10) sind, und am hinteren axialen Ende der Rohkurbelwelle (10) ein hinterer vorläufiger Ansatz (42) in Form eines im Wesentlichen zylindrischen ringförmigen Kranzes verwirklicht wird, dessen Außendurchmesser (D3) größer als der Außendurchmesser (D4) des zylindrischen Teilstücks (20) am axial hinteren Ende ist und der zusammen mit dem zylindrischen Teilstück (20) am axial hinteren Ende eine transversale Schulterfläche (46), die nach hinten gerichtet ist begrenzt.

4. Verfahren nach dem vorhergehenden Anspruch, **dadurch gekennzeichnet, dass** der hintere Kranz (42) mit dem zylindrischen Teilstück (20) am axial hinteren Ende eine transversale Schulterfläche (44), die nach vorn orientiert ist, begrenzt.

5. Verfahren nach einem der Ansprüche 3 oder 4,
**dadurch gekennzeichnet, dass** im Verlauf der Anfangsphase in der transversalen Fläche des vorderen Endes (48) des vorderen Zylinders (40) wenigstens ein zur Kurbelwelle (10) koaxiales mittiges Loch (50) und wenigstens ein exzentrisches Winkelindexierungsloch (52, 54) mit einer zur Achse (A-A) der Kurbelwelle (10) parallelen Achse, die dazu vorgesehen sind, mit der Spitze (24) bzw. mit dem Mitnehmer (56) eines während der Zwischenphase verwendeten Bearbeitungswerkzeugsatzes zusammenzuwirken, verwirklicht werden.

6. Verfahren nach dem vorhergehenden Anspruch, **dadurch gekennzeichnet, dass** zwei Winkelindexierungslöcher (52, 54) verwirklicht werden, die in Bezug auf die Achse (A-A) der Kurbelwelle (10) diametral entgegengesetzt sind.

7. Verfahren nach einem der vorhergehenden Ansprüche, **dadurch gekennzeichnet, dass** im Verlauf der Endphase das jeden vorläufigen Ansatz (40, 42) bildende Material durch spanabhebende Bearbeitung entfernt wird.
